# EUROPÄISCHE PATENTSCHRIFT

(11) **EP 3 120 372 B1**
(45) Veröffentlichungstag und Bekanntmachung des Hinweises auf die Patenterteilung: **08.08.2018**
(21) Anmeldenummer: 15704018.9
(22) Anmeldetag: 13.02.2015
(51) Int. Cl.: H01C 7/12, H01H 37/32, H01H 37/64, H02H 9/04, H01T 1/14, H01H 83/10, H01H 37/76

(54) **ÜBERSPANNUNGSSCHUTZEINRICHTUNG, UMFASSEND MINDESTENS EINEN ÜBERSPANNUNGSABLEITER UND EINE DEM ÜBERSPANNUNGSABLEITER PARALLEL GESCHALTETE, THERMISCH AUSLÖSBARE, FEDERVORGESPANNTE KURZSCHLUSSSCHALTEINRICHTUNG**
SURGE PROTECTION DEVICE, COMPRISING AT LEAST ONE SURGE ARRESTER AND ONE SHORT-CIRCUIT SWITCHING DEVICE WHICH IS CONNECTED IN PARALLEL WITH THE SURGE ARRESTER, CAN BE THERMALLY TRIPPED AND IS SPRING-PRETENSIONED
DISPOSITIF DE PROTECTION CONTRE LES SURTENSIONS COMPRENANT AU MOINS UN PARAFOUDRE ET UN MOYEN DE COMMUTATION DE COURT-CIRCUIT QUI EST PRÉCONTRAINT PAR RESSORT, QUI PEUT ÊTRE DÉCLENCHÉ THERMIQUEMENT ET QUI EST MONTÉ PARALLÈLEMENT AU PARAFOUDRE

(30) Priorität: 20.03.2014 DE 202014002496 U; 07.05.2014 DE 202014003832 U
(43) Veröffentlichungstag der Anmeldung: 25.01.2017
(73) Patentinhaber: Dehn + Söhne GmbH + Co. KG, 92318 Neumarkt/Opf. (DE)
(72) Erfinder: HIRSCHMANN, Helmut, 92348 Berg (DE); WITTMANN, Georg, 92283 Lauterhofen (DE); ZÄUNER, Edmund, 92334 Berching/Pollanten (DE)
(74) Vertreter: Kruspig, Volkmar
(86) Internationale Anmeldenummer: PCT/EP2015/053038
(87) Internationale Veröffentlichungsnummer: WO 2015/139893

(56) Entgegenhaltungen:
- EP-A2- 0 516 922
- WO-A1-2008/028724
- WO-A1-2009/034081
- DE-A1-102011 018 556
- DE-U1-202009 013 505

## Beschreibung

Die Erfindung betrifft eine Überspannungsschutzeinrichtung, umfassend mindestens einen Überspannungsableiter und eine dem Überspannungsableiter parallel geschaltete, thermisch auslösbare, federvorgespannte Kurzschlussschalteinrichtung, wobei vorgenannte Mittel einen Baueinheit bilden, das thermische Auslösemittel im Bereich der zu erwartenden Erwärmung des Überspannungsableiters bei dessen Überlastung angeordnet und als nicht vom Betriebs- oder Stoßstrom durchflossenes Anschlagteil ausgebildet ist, welche bei thermischer Überlast einen Entriegelungsschieber der Schalteinrichtung freigibt, gemäß Oberbegriff des Anspruchs 1.

Aus der DE 295 19 313 U1 ist ein Überspannungsableiter auf Varistorbasis vorbekannt, wobei für eine direkte Übertragung der am Varistor im Schadensfall entstandenen unzulässigen Wärme auf eine thermische Auslöseeinrichtung gesorgt ist. Hierfür ist im Steckteil eine Tragwand vorhanden, wobei der Varistor an einer Seitenfläche der Tragwand und die thermische Auslösung sowie das dazu gehörige Schaltmittel an der anderen Seitenfläche der Tragwand angebracht sind. Hierdurch liegt die thermische Auslösung dem Varistor gegenüber. In einer Ausgestaltung sind eine oder mehrere Anschlussfahnen des Varistors durch die Trennwand hindurch in den Bereich geführt, in dem sich die thermische Auslösung und das entsprechende Schaltmittel befinden.

Die Führung des Betriebsstroms bzw. der auftretenden Überlastströme erfolgt über Kontaktmittel eines Steckteils, welches wiederum in ein Basisteil einbringbar ist. Der Strom gelangt über das Schaltmittel zum Varistor dergestalt, dass auch das eigentliche thermische Auslösemittel, insbesondere ein Lot, stromdurchflossen ist.

Die gesamte Ausführung und Konstruktion der Lehre nach DE 295 19 313 U1 kann nur sehr kleine Ströme schalten. Im Falle des Auftretens von Kurzschlussströmen oder aber bei Gleichspannungsanwendungen ist ein zusätzliches externes Schaltorgan, z.B. in Form eines separaten Schaltmittels oder einer Sicherung erforderlich.
Aus der EP 1 447 831 B1 oder der EP 2 065 914 A1 sind bauliche Kombinationen von Überspannungssteckteilen mit zusätzlichen Schalteinrichtungen bekannt, die entweder in ein gemeinsames Grundgehäuse eingebracht oder von einem solchen Grundgehäuse umgeben sind. Die im oben genannten Stand der Technik geschilderten Lösungen weisen ein Auslöse- bzw. Ausschaltverhalten auf, das nicht an die besonderen Eigenschaften der jeweils eingesetzten Überspannungsableiter, z.B. Varistoren, angepasst ist.
Bei der Überspannungsschutzeinrichtung gemäß EP 2 096 657 A1 ist zunächst eine thermische Abtrennvorrichtung mit lichtbogenlöschenden Eigenschaften vorhanden. Darüber hinaus ist eine zweite Schalteinrichtung mit Löschblechen gebildet. Dieser Stand der Technik entspricht einem Schaltgerät, das mit einer Überspannungsschutzfunktion erweitert wurde und welches nur eingeschränkte Leistungsdaten besitzt sowie lediglich für Spezialanwendungen geeignet ist. DE10 2011 018556 A1, WO 2009/034081 A1 und WO 2008/028724 A1 sind weitere Beispiele für ähnliche Überspannungsschutzeinrichtungen. Fasst man den Stand der Technik zusammen, dann sind thermische Abtrennvorrichtungen üblicherweise so ausgelegt, dass sie das Alterungsverhalten spannungsbegrenzender Bauteile, wie z.B. Varistoren, überwachen und bei Erwärmung über einer kritischen Temperatur ansprechen. Im Abtrennvorgang fließen im Regelfall nur sehr geringe Ströme im Milliamperebis zum maximal einstelligen Amperebereich. Insofern liegt das Schaltvermögen klassischer thermischer Antrennvorrichtungen auch nur in diesem geringen Strombereich.
Überlast- und/oder Fehlerfälle von Überspannungsableitern können im Ergebnis praktischer Erfahrungen auch zu einem Totalausfall bzw. zu einem Durchlegieren der überspannungsbegrenzenden Bauteile führen. Der dann auftretende Kurzschlussstrom der angeschlossenen Versorgungsquelle muss von vorgeordneten Schutzeinrichtungen, z.B. einer Sicherung oder einem mechanischen Schaltgerät unterbrochen bzw. abgeschaltet werden, um eine Back-Up-Schutzfunktion zu erhalten.

Gemäß der EP 1 447 831 B1 wird der fließende Kurzschlussstrom von einer entsprechenden speziellen Schalteinrichtung unterbrochen.

Nachteilig bei der Kombination von Überspannungsschutzgeräten mit Sicherung bzw. mechanischem Schaltgerät ist es, dass zum Ansprechen bzw. Auslösen dieser Elemente immer ein Kurzschlussstrom im Sinne eines mehrfachen Nennstroms der Schalteinrichtung bzw. Sicherung fließen muss.

Dieser Strom, der in der Regel mehrere hundert Ampere aufweist oder in den Kiloamperebereich hineinreicht, kann zur Zerstörung oder Explosion der überspannungsbegrenzenden Bauteile führen und eine Brandgefahr für das Gerät selbst oder für benachbarte Einrichtungen darstellen.

Ist also der auftretende Fehlerstrom in einer Überspannungsschutzeinrichtung größer als derjenige, der von der thermischen Abtrennvorrichtung selbst gelöscht werden kann, jedoch kleiner als der Auslösestrom von Back-Up-Schutzeinrichtungen, wie z.B. einer Sicherung, dann kann der Ableiter mit den oben erwähnten Folgen zerstört werden.

Darüber hinaus ist aus der DE 10 2012 014 595 A1 eine Vorrichtung zum Schutz vor thermischer Überlastung eines zu schützenden Bauteils vorbekannt. Die dortige Lösung soll wahlweise als Abtrenn- oder Kurzschlussschalter für das zu schützende Bauelement einsetzbar sein. Hierfür ist eine Betätigungseinrichtung als thermisch auslösbare Verbindung des zu schützenden Bauteils mit einem vorgespannten Element, z.B. einem Schalter ausgeführt. Erweicht die thermisch lösbare Verbindung, so wird die Kraft des vorgespannten Elements frei und der Schalter begibt sich in einen weiteren Schaltzustand. Der Schalter kann dabei als Abtrennschalter, aber auch als Kurzschließer in Bezug auf das zu schützende Bauelement realisiert werden. Der Schalter besitzt darüber hinaus eine Auswahleinrichtung, mit der einstellbar ist, ob der Schalter als Abtrennschalter oder Kurzschließer wirkt.

Aus dem Vorgenannten ist es daher Aufgabe der Erfindung, eine weiterentwickelte Überspannungsschutzeinrichtung, umfassend mindestens einen Überspannungsableiter und eine dem Überspannungsableiter parallel geschaltete, thermisch auslösbare federvorgespannte Schalteinrichtung anzugeben, wobei der Zustand des eingesetzten Überspannungsableiters, z.B. eines Varistors, entsprechend seinem Betriebs- und Überlastverhalten erfasst und bei Überlastzuständen sicher kurzgeschlossen wird, so dass ein Ansprechen externer Sicherungen möglich ist und ein diesbezüglich definierter Fail-Safe-Zustand vorliegt.

Die Lösung der Aufgabe der Erfindung erfolgt durch eine Überspannungsschutzeinrichtung gemäß der Merkmalskombination nach Anspruch 1, wobei die Unteransprüche mindestens zweckmäßige Ausgestaltungen und Weiterbildungen darstellen.

Es wird demnach von einer Überspannungsschutzeinrichtung, umfassend mindestens einen Überspannungsableiter und eine dem Überspannungsableiter parallel geschaltete, thermisch auslösbare Schalteinrichtung ausgegangen, wobei vorgenannte Mittel eine Baueinheit bilden und das thermische Auslösemittel im Bereich der zu erwartenden Erwärmung des Überspannungsableiters bei dessen Überlast angeordnet ist.

Weiterhin ist das thermische Auslösemittel als nicht vom Betriebs- oder Stoßstrom durchflossenes Anschlagteil ausgebildet, welches bei thermischer Überlast einen Entriegelungsschieber der Schalteinrichtung freigibt.

Das vorerwähnte Anschlagteil ist thermisch und mechanisch mit dem Überspannungsableiter gekoppelt und blockiert den Bewegungsweg des Entriegelungsschiebers.

Die Schalteinrichtung weist bevorzugt zwei gegenüberliegende Kontaktstücke auf, wobei mindestens eines der Kontaktstücke beweglich ausgeführt ist und in Schließrichtung der Schalteinrichtung unter Federvorspannung steht. Der Öffnungszustand der Schalteinrichtung ist durch den Entriegelungsschieber gesichert und kann durch das thermische Auslösemittel zum Schließen der Schalteinrichtung freigegeben werden. Bei einer Ausführungsvariante sind die Kontaktstücke bolzenartige Elemente aus einem leitfähigen, bevorzugt metallischen Material.

Im Öffnungsfall der Schalteinrichtung befindet sich in dem sich ergebenden Abstandsraum ein Trennelement.

Das isolierende Trennelement steht ebenfalls unter Federvorspannung, um im Kurzschlussfall schnell und gerichtet den Abstandsraum zu verlassen.

Mindestens Abschnitte der Kontaktstücke sind innerhalb eines eine Lichtbogenkammer bildenden Formkörpers befindlich, wobei der Formkörper einen Ansatz aufweist, welcher in einem Winkel orientiert ist, der von der Bewegungsrichtung des beweglichen Kontaktstücks abweicht. Hier kann es sich um eine 90°-Orientierung handeln. Zur Aufnahme der Kontaktstücke weist der Formkörper Aufnahmeräume auf.

Ebenfalls besitzt der Ansatz einen Hohlraum zur Aufnahme des Trennelements und der die Vorspannkraft erzeugenden Federeinrichtung.

Die zueinander weisenden Flächen der Kontaktstücke der Schalteinrichtung können eine Kontur besitzen, um die Stromübergangsfläche zu vergrößern und den Übergangswiderstand zu verringern.

Dabei können bei einer Ausgestaltung die Flächen als ineinandergreifender Konus und Gegenkonus ausgebildet werden.

Der Entriegelungsschieber, welcher bevorzugt aus einem Kunststoffmaterial besteht bzw. als Kunststoff-Spritzteil gefertigt ist, liegt einerseits am Anschlagteil an und fixiert andererseits die Schalteinrichtung, d.h. das bewegliche, federvorgespannte Kontaktstück.

Der Entriegelungsschieber besitzt darüber hinaus einen nasenartigen Abschnitt, weicher das federvorgespannte Kontaktstück der Schalteinrichtung sichert.

Im Bereich des federvorgespannten Kontaktstücks, welches vom nasenartigen Abschnitt des Entriegelungsschiebers gesichert wird, ist ein flexibles elektrisches Verbindungsmittel befestigt, was dann zu einem Anschluss am Überspannungsableiter führt.

Der Formkörper, der Hohlraum und das Trennelement sind bevorzugt so ausgebildet, dass insbesondere bei geöffneter Schalteinrichtung eine gasdichte Abschottung realisiert wird, so dass sich ein quasi gekapselter Lichtbogenbrennraum bzw. eine diesbezügliche Lichtbogenlöschkammer ergibt.

Die Erfindung soll nachstehend anhand eines Ausführungsbeispiels sowie unter Zuhilfenahme von Figuren näher erläutert werden.

Hierbei zeigen:
- Fig. 1: ein Prinzipschaltbild der erfindungsgemäßen Lösung mit Überwachungskreis Ü und Kurzschließer 4; 6 und
- Fig. 2: eine perspektivische Darstellung einer Überspannungsschutzeinrichtung gemäß der Erfindung, ausgebildet als Steckteil zur Aufnahme in ein (nicht gezeigtes) Basisteil, wobei innerhalb des Steckteils der Formkörper mit Schalteinrichtung sowie das thermische Auslösemittel befindlich sind.

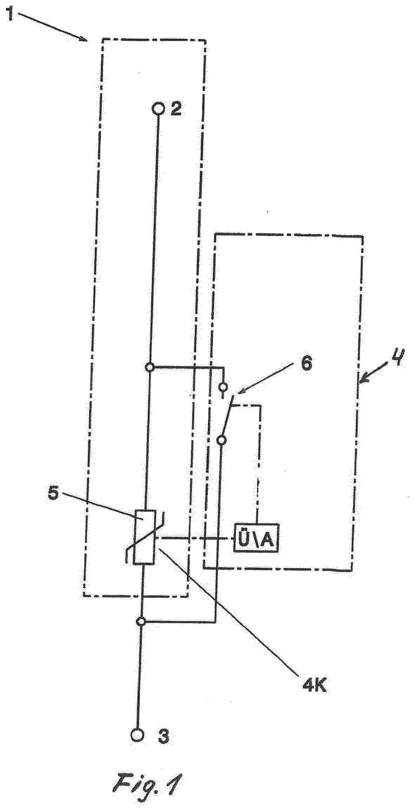

Die Darstellung des Prinzipschaltbilds nach Fig. 1 geht von einem Überspannungsschutzmittel 1 aus, bei welchem der Betriebs-Stoßstrompfad und der Überwachungspfad Ü funktional getrennt sind. Die integrierte Schalteinrichtung 6 ist als Kurzschließer ausgebildet, wobei mit dem Bezugszeichen 5 der Überspannungsableiter, z.B. ausgebildet als Varistor, gekennzeichnet ist. Mit dem Bezugszeichen 4 ist in Fig. 1 die Entriegelung der Schalteinrichtung 6 symbolisiert und mit 4K das thermische Koppelelement als thermisches Auslösemittel bezeichnet. Die Anschlüsse des Überspannungsschutzmittels weisen die Bezugszeichen 2 und 3 auf.

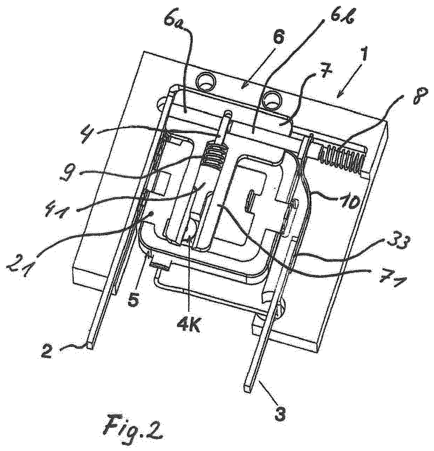

Das erfindungsgemäß realisierte Steckteil umfasst die Überspannungsschutzeinrichtung 1 mit dem Überspannungsableiter 5, den Entriegelungsschieber 4 und den Formkörper 7, welcher die Schalteinrichtung 6 mit den Kontaktstücken 6a, 6b aufnimmt. Darüber hinaus sind an der Unterseite des Steckteils Steckkontakte 2; 3 zur Betriebsstromzuführung vorhanden. Bezugszeichen 10 nach Fig. 2 kennzeichnet einen beweglichen Leiterabschnitt, um den Stromkreis vom Steckkontakt im Bild links über die Schalteinrichtung zum Varistor und von diesem zum Steckkontakt im Bild rechts zu schließen.

Die Fig. 2 zeigt den scheibenförmigen Varistor 5 mit einer aufgebrachten metallischen Leitfläche, die sich in einen Bereich erwarteter starker Erwärmung des Varistors 5 erstreckt, wobei in diesem Bereich das thermische Auslösemittel 4K aufgebracht ist.

Die Schalteinrichtung 6 umfasst Kontaktstücke 6a und 6b (siehe Fig. 2), wobei im gezeigten Beispiel das Kontaktstück 6b unter Vorspannung einer Feder 8 beweglich im Formkörper 7 gelagert ist.

In Kurzschlussposition der Schalteinrichtung 6 wird das bewegliche Kontaktstück 6b an das feste Kontaktstück 6a angepresst.

Der Öffnungszustand der Schalteinrichtung 6 ist also durch das Mittel 4 gesichert und durch das thermische Auslösemittel 4K zum Schließen der Schalteinrichtung 6 freigebbar.

Der geöffnete Zustand der Schalteinrichtung 6 ist mit der Fig. 2 illustriert. Hier ist auch die Position des Trennelements 4 erkennbar, dessen Lageveränderung beim Kurzschluss unterstützt von der Feder 9 erfolgt.

Der Formkörper 7 weist einen Ansatz 71 auf, welcher in einem Winkel orientiert ist, der von der Bewegungsrichtung des beweglichen Kontaktstücks 6b abweicht.

Der Ansatz 71 umfasst einen Hohlraum zur Aufnahme eines Abschnitts 41 des Trennelements 4.

Die zueinander weisenden Flächen der Kontaktstücke 6a und 6b können eine Konuskontur mit zugehöriger konischer Ausnehmung im Gegenkontaktstück aufweisen. Hierdurch wird die Stromübergangsfläche vergrößert und der Übergangswiderstand zwischen den Kontaktstücken reduziert.
Das flexible elektrische Verbindungsmittel 10 ist einerseits mit dem beweglichen Kontaktstück 6b in Verbindung stehend und führt andererseits zu einem angeformten Anschlussschenkel 33. Der weitere elektrische Anschluss 21 des Varistors 5 führt zum Steckanschluss 2.

Die Innenkontur innerhalb des Formstücks 7 entspricht der Außenkontur des beweglichen Kontaktstücks 6b unter Beachtung der notwendigen Toleranzen zur gewünschten freien Beweglichkeit des diesbezüglichen Kontaktstücks.

Das überspannungsbegrenzende Bauteil 5, ausgebildet bevorzugt als Varistor, ist gemäß den zeichnerischen Darstellungen über ein thermisches Auslösemittel 4K thermisch an das Entriegelungs- und Auslösesystem gekoppelt. Dabei steht das thermische Auslöseelement 4K unter keinem Stromdurchfluss.

Die Ausgestaltung des thermischen Auslöseelements kann damit völlig frei zur Optimierung des Ansprechverhaltens und damit zum Erreichen einer guten Auslösecharakteristik gewählt werden, und zwar über eine entsprechende Positionierung auf dem Varistor 5 und/oder einer Dimensionierung und Auswahl des Materials für das thermische Auslöseelement hinsichtlich Wärmekapazität und Wärmeleitfähigkeit. Das thermische Auslöseelement 4K kann als separates Teil gefertigt werden, welches mit einem Lot oder einem wärmeempfindlichen Kleber am Varistor fest befestigt wird. Andererseits aber kann das thermische Auslösemittel auch selbst aus einem Material bestehen, das sich bei Wärmeeinwirkung nachgiebig verformt.

In den überwiegenden Fällen wird eine sehr schnelle und thermisch empfindliche Auslösecharakteristik gewünscht. Dies kann dadurch realisiert werden, dass das thermische Auslösemittel direkt mit dem überspannungsbegrenzenden Bauteil optimal wärmeleitend verbunden wird oder aus einem thermisch isolierenden Umhüllungsmaterial gefertigt ist, um Wärmeverluste zu vermeiden. Wärmeleitfähige Verbindungen zu quasi parasitären Wärmesenken werden vermieden.

Da bei der erfindungsgemäßen Lösung der Überwachungskreis Ü sich nicht im Betriebsstrompfad befindet, ist die Auslegung der thermischen Überwachungseinrichtung ausschließlich und unter dem Blickwinkel des Ausfallverhaltens des spannungsbegrenzenden Bauelements dimensionierbar.
Beim Überschreiten einer eingestellten kritischen Temperatur wird die thermische Kopplung mit dem überspannungsbegrenzenden Element aufgehoben. Das thermische Auslösemittel wird mit Blick auf die Federkraft 9 und den Entriegelungsschieber 4; 41 weg bewegt, so dass die Schalteinrichtung in den Kurzschluss übergeht.

Im Kurzschlussfall wird der Strom über die Kontaktstücke 6a und 6b geführt, wobei die entsprechende Kontaktstelle unter Federvorspannung steht.

## Patentansprüche

1. Überspannungsschutzeinrichtung, umfassend mindestens einen Überspannungsableiter (5) und eine Schalteinrichtung, wobei vorgenannte Mittel eine Baueinheit bilden, ein thermisches Auslösemittel (4K), welches im Bereich der zu erwartenden Erwärmung des Überspannungsableiters (5) bei dessen Überlastung angeordnet und als nicht vom Betriebs- oder Stoßstrom durchflossenes Anschlagteil ausgebildet ist, welches bei thermischer Überlast einen Entriegelungsschieber (4; 41) der Schalteinrichtung (6) freigibt, wobei das Anschlagteil thermisch und mechanisch mit dem Überspannungsableiter (5) gekoppelt ist und den Bewegungsweg des Entriegelungsschiebers (4; 41) blockiert,
die Schalteinrichtung (6) zwei gegenüberliegende, insbesondere ineinandergreifende, Kontaktstücke (6a; 6b) aufweist, wobei mindestens eines der Kontaktstücke (6b) beweglich ausgeführt ist,
**dadurch gekennzeichnet, dass**
die Schalteinrichtung als eine dem Überspannungsableiter parallel geschaltete, thermisch auslösbare, federvorgespannte Kurschlussschalteinrichtung (6) ausgebildet ist und das bewegliche Kontaktstück (6b) in Schließrichtung der Schalteinrichtung unter Federvorspannung (8) steht, weiterhin der Öffnungszustand der Schalteinrichtung durch den Entriegelungsschieber (4) gesichert und durch das thermische Auslösemittel (4K) zum Schließen der Schalteinrichtung (6) freigebbar ist, wobei
das Trennelement unter Federvorspannung (9) steht, um im Kurzschlussfall der Schalteinrichtung (6) sich schnell und gerichtet von den Kontaktstücken (6a; 6b) zu entfernen.

2. Überspannungsschutzeinrichtung nach Anspruch 1,
**dadurch gekennzeichnet, dass**
mindestens Abschnitte der Kontaktstücke (6a; 6b) innerhalb eines eine Lichtbogenkammer bildenden Formkörpers (7) befindlich sind, wobei der Formkörper (7) einen Ansatz (71) aufweist, welcher in einem Winkel orientiert ist, der von der Bewegungsrichtung des beweglichen Kontaktstücks (6b) abweicht.

3. Überspannungsschutzeinrichtung nach Anspruch 1 und 2,
**dadurch gekennzeichnet, dass**
der Ansatz (71) einen Hohlraum zur Aufnahme des Trennelements (41) besitzt.

4. Überspannungsschutzeinrichtung nach einem der vorangegangenen Ansprüche,
**dadurch gekennzeichnet, dass**
die zueinander weisenden Flächen der Kontaktstücke (6a; 6b) der Schalteinrichtung (6) eine Kontur besitzen, um die Stromübergangsfläche zu vergrößern und den Übergangswiderstand zu verringern.

5. Überspannungsschutzeinrichtung nach Anspruch 4,
**dadurch gekennzeichnet, dass**
die Flächen der Kontaktstücke (6a; 6b) als Konus und Gegenkonus ausgebildet sind.

## Claims

1. Surge protection device, comprising at least one surge arrester (5) and one switching device, said means constituting a constructional unit, a thermal trigger means (4K) which is arranged in the area of the heating to be expected of the surge arrester (5) in the event of its overloading and is configured as a stopper element through which the operating or surge current does not flow, which releases an unlocking slide (4; 41) of the switching device (6) in the event of thermal overload, wherein the stopper element is thermally and mechanically coupled to the surge arrester (5) and blocks the travel path of the unlocking slide (4; 41),
the switching device (6) includes two opposite, in particular meshing contact pieces (6a; 6b), wherein at least one of the contact pieces (6b) is realized to be movable,
**characterized in that**
the switching device is configured as a short-circuit switching device (6) which is connected in parallel with the surge arrester, can be thermally triggered and is spring-pretensioned, and the movable contact piece (6b) is under spring pretension (8) in the closing direction of the switching device, furthermore the opening state of the switching device can be secured by the unlocking slide (4) and released by the thermal trigger means (4K) for closing the switching device (6), wherein
a separating element is under spring pretension (9) in order to move away from the contact pieces (6a; 6b) in a fast and directed manner in the case of a short-circuit of the switching device (6).

2. Surge protection device according to claim 1,
**characterized in that**
at least sections of the contact pieces (6a; 6b) are located within a shaped body (7) constituting an arc chamber, wherein the shaped body (7) comprises a shoulder (71) which is oriented at an angle deviating from the movement direction of the movable contact piece (6b).

3. Surge protection device according to claims 1 and 2,
**characterized in that**
the shoulder (71) has a hollow space for receiving the separating element (41).

4. Surge protection device according to anyone of the preceding claims,
**characterized in that**
the facing surfaces of the contact pieces (6a; 6b) of the switching device (6) have a contour in order to increase the current transfer surface and to reduce the transfer resistance.

5. Surge protection device according to claim 4,
**characterized in that**
the surfaces of the contact pieces (6a; 6b) are formed as a cone and a mating cone.

## Revendications

1. Système de protection contre les surtensions, comportant au moins une descente de surtension (5) et un dispositif de commutation, lesdits moyens formant une unité structurelle, un moyen de déclenchement thermique (4K) qui est agencé au niveau de l'échauffement à attendre de la descente de surtension (5) en cas de surcharge de celle-ci et qui est réalisé sous la forme d'une partie de butée qui n'est pas traversée par le courant de fonctionnement ou de pointe et qui, en cas de surcharge thermique, libère un coulisseau de déverrouillage (4 ; 41) du dispositif de commutation (6),
dans lequel
la partie de butée est couplée thermiquement et mécaniquement à la descente de surtension (5) et bloque le chemin de mouvement du coulisseau de déverrouillage (4 ; 41),
le dispositif de commutation (6) comprend deux plots de contact (6a ; 6b) opposés, en particulier imbriqués l'un dans l'autre, l'un au moins des plots de contact (6b) étant réalisé mobile,
**caractérisé en ce que**
le dispositif de commutation est réalisé sous la forme d'un dispositif de court-circuit (6) branché en parallèle à la descente de surtension, déclenchable par voie thermique et précontraint par ressort, et le plot de contact mobile (6b) est sous précontrainte par ressort (8) dans la direction de fermeture du dispositif de commutation, et l'état d'ouverture du dispositif de commutation est sécurisé par le coulisseau de déverrouillage (4) et est libérable par le moyen de déclenchement thermique (4K) pour fermer le dispositif de commutation (6),
l'élément de sectionnement étant sous précontrainte par ressort (9) pour, en cas de court-circuit du dispositif de commutation (6), s'éloigner rapidement et de façon orientée depuis les plots de contact (6a ; 6b).

2. Système de protection contre les surtensions selon la revendication 1,
**caractérisé en ce que**
des portions au moins des plots de contact (6a ; 6b) sont situées à l'intérieur d'un corps moulé (7) formant une chambre à arc électrique, le corps moulé (7) présentant un épaulement (71) qui est orienté sous un angle qui diffère de la direction de mouvement du plot de contact mobile (6b).

3. Système de protection contre les surtensions selon la revendication 1 et 2,
**caractérisé en ce que**
l'épaulement (71) possède une cavité pour loger l'élément de sectionnement (41).

4. Système de protection contre les surtensions selon l'une des revendications précédentes,
**caractérisé en ce que**
les surfaces dirigées l'une vers l'autre des plots de contact (6a ; 6b) du dispositif de commutation (6) présentent un contour pour augmenter la surface de transition de courant et pour réduire la résistance à la transition.

5. Système de protection contre les surtensions selon la revendication 4,
**caractérisé en ce que**
les surfaces des plots de contact (6a ; 6b) sont réalisées sous forme de cône et de cône complémentaire.
